# EUROPÄISCHE PATENTANMELDUNG

(11) **EP 1 308 715 A1**
(43) Veröffentlichungstag der Anmeldung: **07.05.2003**
(21) Anmeldenummer: 02020864.1
(22) Anmeldetag: 18.09.2002
(51) Int. Cl.: G01N 21/64, G02B 21/00, G06T 11/00

(54) **Verfahren in der Fluoreszenzmikroskopie zur Untersuchung von Proben mit Mehrfachfluorophoren**

(30) Priorität: 16.10.2001 DE 10151217
(71) Anmelder: CARL ZEISS JENA GmbH, 07745 Jena (DE)
(72) Erfinder: Wolleschensky, Ralf, 99510 Schöten (DE); Zimmermann, Bernhard, Dr., 14482 Potsdam (DE); Tille, Sebastian, Pleasantville, NY 10570 (US)
(74) Vertreter: Hampe, Holger

(57) **Zusammenfassung**

Verfahren in der Fluoreszenzmikroskopie zur Untersuchung von Proben mit Mehrfachfluorophoren,
wobei für Probenpunkte oder Punktverteilungen eine spektrale Aufspaltung der von der Probe kommenden Strahlung erfolgt,
vorzugsweise zum Betrieb eines Laser-Scanning - Mikroskopes oder einer Fluoreszenz-Screeninganordnung oder eines Durchflußzytometers,
wobei ein λ- stack erzeugt wird, indem die spektrale Verteilung pro Bildpunkt mit einzelnen Detektionskanälen gemessen wird und die Signale der Detektionssignale mit mindestens einer der Ortskoordinaten x,y oder z und/ oder dem Meßzeitpunkt zugeordnet abgespeichert werden und über einer Farbe oder einem Spektralbereich zugeordnete Bildkanäle und farblicher Zuordnung Falschfarbenbilder erzeugt werden,
wobei über Eingabemittel oder automatisch ROI als interessierende Probengebiete markiert werden können.

## Beschreibung

Die Erfindung bezieht sich auf ein Verfahren in der Fluoreszenzmikroskopie, insbesondere der Laser Scanning Mikroskopie, der Fluoreszenz-Korrelationsspektroskopie und der Scanning Nahfeldmikroskopie, zur Untersuchung von vorwiegend biologischen Proben, Präparaten und zugehörigen Komponenten. Mit eingeschlossen sind auf Fluoreszenzdetektion basierenden Verfahren zum Screenen von Wirkstoffen (High Throughput Sceening). Durch den Übergang von der Detektion von wenigen breiten spektralen Farbstoffbändern zur simultanen Aufnahme kompletter Spektren eröffnen sich neue Möglichkeiten bei der Identifikation, Separation und Zuordnung der meist analytischen oder funktionalen Probeneigenschaften zu räumlichen Teilstrukturen oder dynamischen Prozessen. Simultan-Untersuchungen von Proben mit Mehrfachfluorophoren werden damit bei überlappenden Fluoreszenzspektren auch in räumlichen Strukturen von dicken Proben möglich.

### Stand der Technik

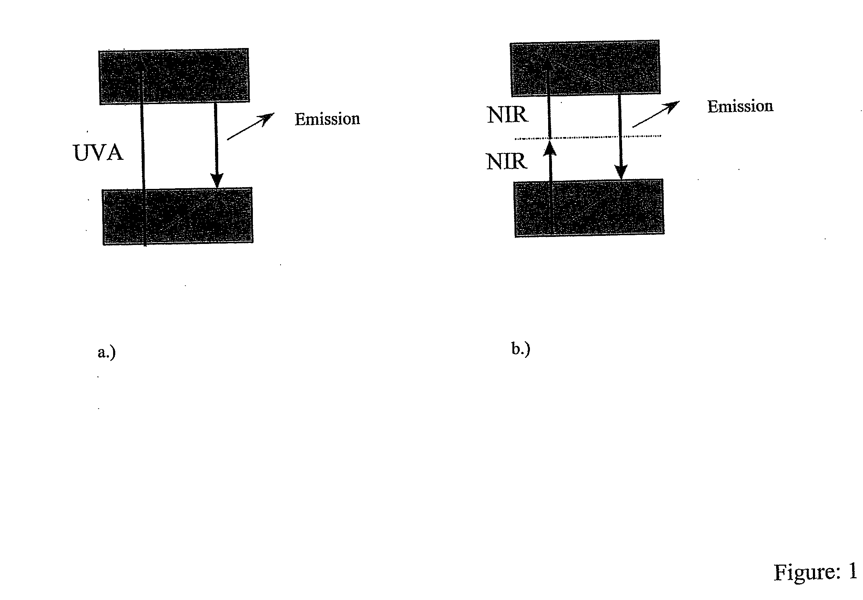

Ein klassisches Anwendungsgebiet der Lichtmikroskopie zur Untersuchung von biologischen Präparaten ist die Fluoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet.
Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet (Abb. 1a). Die so angeregten Farbstoffmoleküle können auf verschiedene Weise in den Grundzustand zurück gelangen. In der Fluoreszenzmikroskopie ist der Übergang unter Aussendung eines Fluoreszenzphotons am wichtigsten. Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.
Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner, mit verschiedenen Farbstoffen eingefärbten Zellteilen, möglich. Grundsätzlich können jedoch auch mehrere Teile eines Präparates gleichzeitig mit verschiedenen sich spezifisch anlagernden Farbstoffen eingefärbt werden (Mehrfachfluoreszenz). Zur Unterscheidung, der von den einzelnen Farbstoffen ausgesendeten Fluoreszenzsignale, werden wiederum spezielle dichroitischen Strahlteiler verwendet.

Neben der Anregung der Farbstoffmoleküle mit einem hochenergetischen Photon (Einphotonen-Absorption) ist auch eine Anregung mit mehreren Photonen geringerer Energie möglich (Abb. 1b). Die Summe der Energien der Einzelphotonen entspricht hierbei ungefähr einem Vielfachen des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungs- von der Emissionsstrahlung erfolgt in der gleichen Art und Weise wie bei der Einphotonen-Absorption.

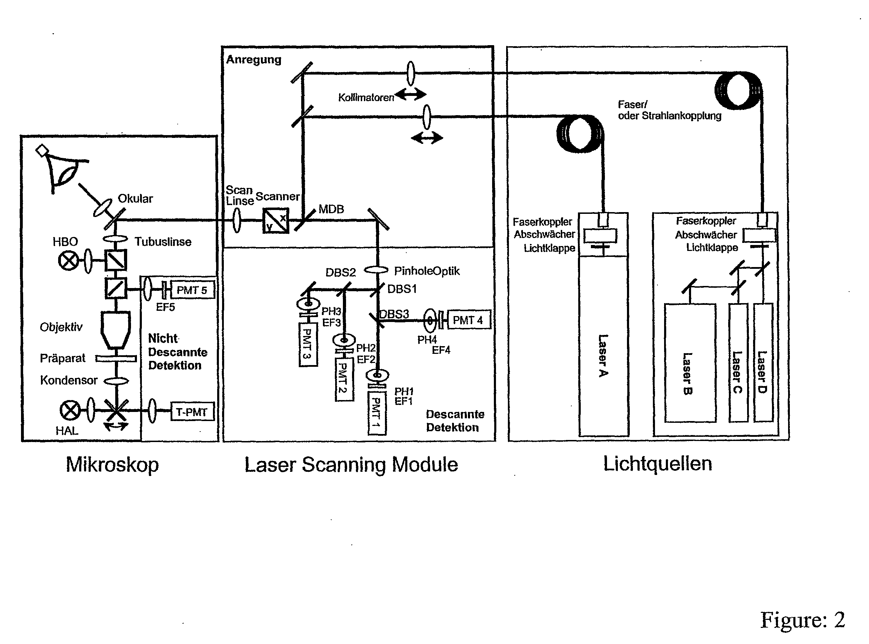

Der Stand der Technik soll im folgenden beispielhaft anhand eines konfokalen Laser-Scanning- Mikroskopes (LSM) erläutert werden (Abb. 2).

Ein LSM gliedert sich im wesentlichen in 4 Module: Lichtquelle, Scanmodul, Detektionseinheit und Mikroskop. Diese Module werden im folgenden näher beschrieben. Es wird zusätzlich auf DE19702753A1 verwiesen.

Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei verschiedene Laser (Argon, Argon Krypton, TiSa-Laser). Weiterhin erfolgt im Lichtquellenmodul die Selektion der Wellenlängen und die Einstellung der Intensität der benötigten Anregungswellenlänge, z.B. durch den Einsatz eines akusto optischen Kristalls. Anschließend gelangt die Laserstrahlung über eine Faser oder eine geeignete Spiegelanordnung in das Scanmodul.
Die in der Lichtquelle erzeugte Laserstrahlung wird mit Hilfe des Objektivs beugungsbegrenzt über die Scanner, die Scanoptik und die Tubuslinse in das Präparat fokussiert. Die Scanner rastern punktförmig die Probe in x-y-Richtung ab. Die Pixelverweilzeiten beim Scannen über die Probe liegen meist im Bereich von weniger als einer Mikrosekunde bis zu einigen Sekunden.
Bei einer konfokalen Detektion (descanned Detektion) des Fluoreszenzlichtes, gelangt das Licht, das aus der Fokusebene (Specimen) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dichroitischer Blockfilter (EF) der nochmals die Anregungsstrahlung unterdrückt. Nach Passieren des Blockfilters wird das Fluoreszenzlicht mittels eines Punktdetektors (PMT) gemessen.
Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descanned Detektion).

In einer weiteren Anordnung zur Detektion einer durch Mehrphotonenabsorption angeregten Farbstofffluoreszenz erfolgt weiterhin eine descanned Detektion, jedoch wird diesmal die Pupille des Objektives in die Detektionseinheit abgebildet (nichtkonfokal descanned Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.
Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, daß nur das vom jeweiligen Farbstoff ausgesendete Fluoreszenzlicht vom Punktdetektor gemessen wird.

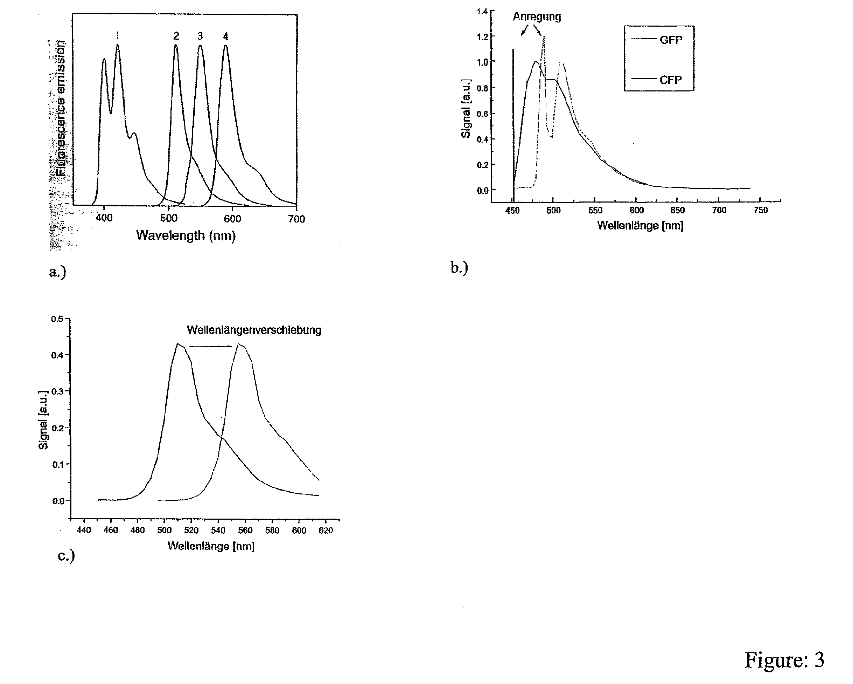

In biomedizinischen Applikationen werden zur Zeit mehrere verschiedene Zellregionen mit verschiedenen Farbstoffen gleichzeitig markiert (Multifluoreszenz). Die einzelnen Farbstoffe können mit den Stand der Technik entweder aufgrund verschiedener Absorptionseigenschaften oder Emissionseigenschaften (Spektren) getrennt nachgewiesen werden (Abb 3a).
Abb.3a zeigt die Emissionsspektren von verschiedenen typischen Farbstoffen. Aufgetragen ist das Emissionssignal in Abhängigkeit von der Wellenlänge. Zu erkennen ist, daß sich die mit 1 bis 4 bezeichneten Farbstoffe in der Lage und Form ihrer Emissionsspektren unterscheiden.
Zum getrennten Nachweis erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in verschiedenen Punktdetektoren (PMT x).
Die Emissionsspektren verschiedener in Abb. 3b dargestellter Farbstoffe können sich auch stark überlagern, so dass eine Trennung der Emissionssignale verschiedener Farbstoffe mit DBS schwierig ist. Besitzen die Farbstoffe jedoch verschiedene Absorptionseigenschaften, so können sie selektiv mit einem Multitracking Verfahren wie in DE CZ7302 beschrieben angeregt werden. Abb.3b zeigt die Emissionssignale in Abhängigkeit von der Wellenlänge für die Farbstoffe CFP und Cyan-FP, wobei mit zwei Laserlinien bei 458 nm und 488 nm angeregt wurde. Diese Farbstoffe sind zur Untersuchung von Lebendpräparaten besonders geeignet, da sie keine toxischen Wirkungen auf die zu untersuchenden Proben ausüben. Um beide Farbstoffe CFP, CFT möglichst effizient detektieren zu können, wird in einer Scanrichtung CFP mit einer Wellenlänge von 458nm angeregt und die Fluoreszenz von 460-550 nm detektiert. Auf dem Rückweg des Scanners erfolgt die selektive Anregung von GFP mit 488nm und eine Detektion des Wellenlängenbereiches von 490 - 650 nm.

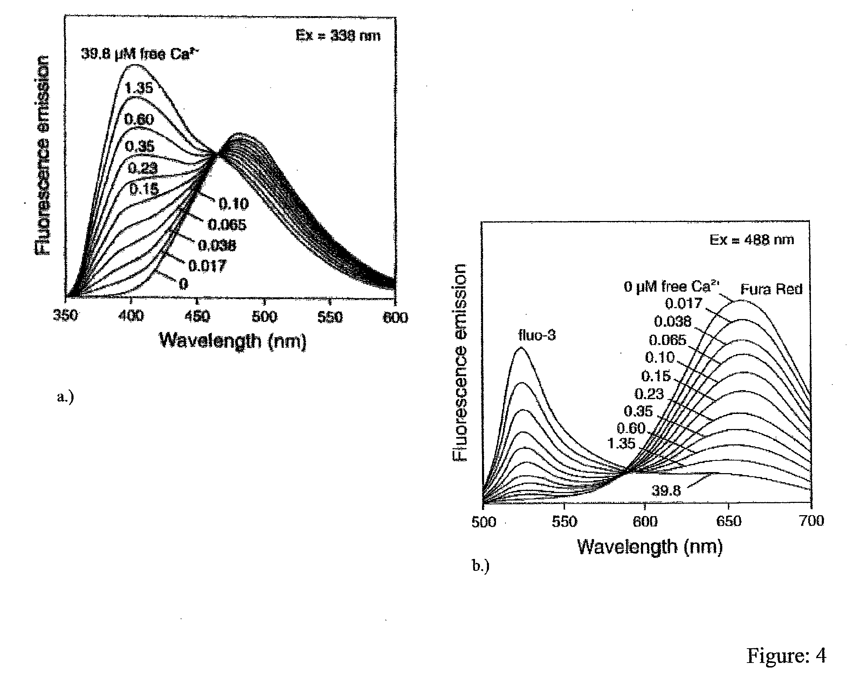

Ist die Lage des Emissionsspektrums der verwendeten Farbstoffe unbekannt oder tritt eine von der Umgebung (innerhalb und außerhalb der Probe: Temperatur, Konzentration, pH-Wert) abhängige Verschiebung des Emissionsspektrums (Abb. 3c) auf, so ist eine effiziente Detektion der Farbstofffluoreszenzen nur bedingt möglich. In Abb. 3c ist wiederum das Emissionssignal in Abhängigkeit von der Wellenlänge dargestellt. Die Wellenlängenverschiebung kann bis zu mehreren 10 nm betragen. Zur Vermessung des Emissionsspektrums in der Probe werden heutzutage Spektrometer auch in Verbindung mit einem LSM eingesetzt. Hierbei wird statt eines Punktdetektors ein herkömmliches meist hochauflösendes Spektrometer verwendet (Patent Dixon, et al. US 5,192,980). Diese können jedoch nur punktuell oder gemittelt über ein Gebiet ein Emissionsspektrum aufzeichnen. Es handelt sich also um eine Art der Spektroskopie.
In einer weiteren Applikation der Fluoreszenzmikroskopie wird die Ionenkonzentration (z.B.: Ca⁺, K⁺, Mg²⁺, ZN⁺,...) insbesondere in biologischen Präparaten bestimmt. Hierzu werden spezielle Farbstoffe oder Farbstoffkombinationen (z.B. Fura, Indo, Fluo; Molecular Probes, Inc.) verwendet, die eine spektrale Verschiebung in Abhängigkeit von der Ionen konzentration besitzen. Abb. 4a) zeigt die Emissionsspektren von Indo-1 in Abhängigkeit von der Konzentration der Kalzium-Ionen. Abb. 4b) zeigt ein Beispiel für die Emissionsspektren in Abhängigkeit von der Kalziumlonenkonzentration bei Verwendung der Kombination von Fluo-3 und Fura Red-Farbstoffen. Diese speziellen Farbstoffe werden als Emissionsratiofarbstoffe bezeichnet. Summiert man die beiden in Abb. 4a dargestellten Fluoreszenzbereiche und bildet das Verhältnis (Ratio) beider Intensitäten, so kann auf die entsprechende lonenkonzentration rückgeschlossen werden. Meist werden bei diesen Messungen dynamische Änderung der lonenkonzentration in Lebendpräparaten untersucht, die eine Zeitauflösung von weniger als einer Millisekunde erfordern.
Ein bei Multifluoreszenz-Aufnahmen störender und unerwünschter Effekt sind Überlagerungen durch Hintergrundsignale. Dies können Reflexionen einzelner Laser von der Probe oder auch breitbandige Autofluoreszenzsignale von Probenbestandteilen sein, die die spektralen Signaturen der zu untersuchenden fluoreszenzmarkierten Probenstellen überlagern und damit deren Untersuchung erschweren, teilweise sogar verhindern.

Durchflußzytometer dienen der Untersuchung und der Klassifikation von Zellen und anderen Partikeln. Die Zellen befinden sich hierzu in einer Flüssigkeit gelöst und werden durch eine Kapillare gepumpt. Zur Untersuchung der Zellen wird ein Laserstrahl von der Seite in die Kapillare fokussiert. Die Zellen sind mit verschiedenen Farbstoffen oder fluoreszierenden Biomolekülen gefärbt. Gemessen wird das angeregte Fluoreszenzlicht und das rückgestreute Anregungslicht. Der Stand der Technik ist in "Flow Cytometry and Sorting", Second Edition, M.R. Melamed, T. Lindmo, M.L. Mendelsohn, Eds. Wiley & Sons, Inc. New York, 1990, pp 81-107 beschrieben.
Aus dem rückgestreuten Signal kann die Größe der Zellen bestimmt werden. Mit Hilfe der Spektraleigenschaften der Fluoreszenz einzelner Zellen können verschiedene Zellen separiert/sortiert oder getrennt gezählt werden. Die Sortierung der Zellen erfolgt mit einem elektrostatischen Feld in verschiedene Kapillaren. Das Ergebnis, d.h. z.B. die Anzahl der Zellen mit Farbstoff A im Vergleich zu Zellen mit Farbstoff B wird häufig in Histogrammen dargestellt. Die Durchflußgeschwindigkeit beträgt typischerweise einige 10-100 cm/s. Deshalb wird eine hochempfindliche Detektion benötigt. Zur Einschränkung des Detektionsvolumens erfolgt nach dem Stand der Technik eine konfokale Detektion.
Die Genauigkeit der Durchflußmessung wird von verschiedenen Faktoren beeinflußt. Diese sind zum Beispiel nicht spezifische Fluoreszenzen, Autofluoreszenzen von Zellen, Fluoreszenzen von Optikkomponenten und Rauschen der verwendeten Detektoren.
Aufgabe der Erfindung sind neue Methoden zur flexiblen und frei programmierbaren Detektion, mit der Farbstoffe, die sich in ihren Absorptionsund Emissionseigenschaften nur wenig unterscheiden, getrennt in einem bildgebenden Mikroskopsystem gemessen und dargestellt werden können. Ein Übersprechen zwischen den einzelnen Farbstoffen soll mit dem erfindungsgemäßen Verfahren sicher erkannt und durch Datenprozessierung eliminiert werden.
Diese Methoden sind in bildgebenden wie in analytischen Mikroskopiersystemen einsetzbar. Die Mikroskopsysteme sind bildgebende Systeme wie Laser-Scanning-Mikroskope zur dreidimensionalen Untersuchung von biologischen Präparaten mit einer optischen Auflösung bis zu 200 nm, Scanning-Nahfeld-Mikroskope zur hochaufgelösten Untersuchung von Oberflächen mit einer Auflösung von bis zu 10 nm. Fluoreszenzkorrelations-Mikroskope zur quantitativen Bestimmung von Molekülkonzentrationen und zur Vermessung von Molekül-Diffussionen. Weiterhin sind auf Fluoreszenzdetektion basierende Verfahren zum Screenen von Farbstoffen und Verfahren zur Durchflußzytometrie eingeschlossen.
In all den o.g. Systemen werden Fluoreszenzfarbstoffe zur spezifischen Markierung der Präparate eingesetzt. Die o.g. Aufgabe wird durch Verfahren und Anordnungen gemäß den unabhängigen Patentansprüchen gelöst. Bevorzugte Weiterbildungen sind Gegenstand der abhängigen Ansprüche.
Durch die erfindungsgemäßen Verfahren können die Anzahl der simultan einsetzbaren Farbstoffsignaturen, d.h. die Anzahl der simultan untersuchbaren Eigenschaften beispielsweise von Zellen erhöht werden. Bei sich stark überlappenden Spektralsignaturen der einzelnen Farbstoffe muß nach dem Stand der Technik der Wellenlängenbereich zur getrennten Detektion der Fluoreszenzsignale einzelner Farbstoffe eingeschränkt werden. Dadurch verringert sich die Empfindlichkeit der Detektion, d.h. zu einem erhöhten Rauschen der Detektoren, da höhere Verstärkungen genutzt werden. Dies wird durch die erfindungsgemäßen Verfahren verhindert. Weiterhin können nichtspezifische Fluoreszenzsignale, Autofluoreszenzen und Fluoreszenzen der Meßvorrichtung absepariert werden.

### Beschreibung der Erfindung

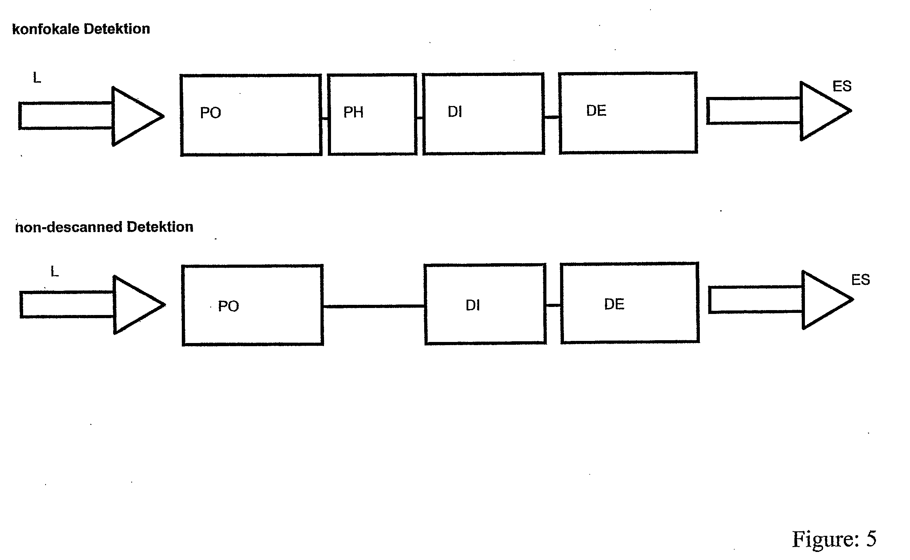

Hintergrund des erfindungsgemäßen Verfahrens ist eine spektral aufgespaltete Detektion der Fluoreszenz. Dazu wird das Emissionslicht im Scanmodul oder im Mikroskop (bei Mehrphotonen-Absorption) mit Hilfe eines Elementes zur Trennung der Anregungsstrahlung von der detektierten Strahlung wie dem Hauptfarbteiler (MDB) oder einem AOTF gemäß 7346DE oder gemäß 7323DE vom Anregungslicht abgespalten. Bei Durchlichtanordnungen kann ein derartiges Element auch völlig entfallen. Ein Blockschaltbild der nun folgenden Detektoreinheit ist in Abb. 5 dargestellt. Das Licht der Probe L wird nun mit Hilfe von einer abbildenden Optik PO bei konfokaler Detektion durch eine Blende (Pinhole) PH fokussiert, wodurch Fluoreszenz, die außerhalb des Fokus entstand, unterdrückt wird. Bei einer nichtdescannten Detektion entfällt die Blende. Das Licht wird nun mit Hilfe eines winkeldispersiven Elements Dl in seine Spektralanteile zerlegt. Als winkeldispersive Elemente kommen Prismen, Gitter und beispielsweise akusto optische Elemente in Frage. Das vom dispersiven Element in seine spektralen Komponenten aufgespaltete Licht wird im Anschluß auf einen Zeilendetektor DE abgebildet. Dieser Zeilendetektor DE mißt also das Emissionssignal in Abhängigkeit von der Wellenlänge und wandelt dies in elektrische Signale ES um. Zusätzlich kann der Detektionseinheit noch ein Linienfilter zur Unterdrückung der Anregungswellenlängen vorgeschaltet werden.

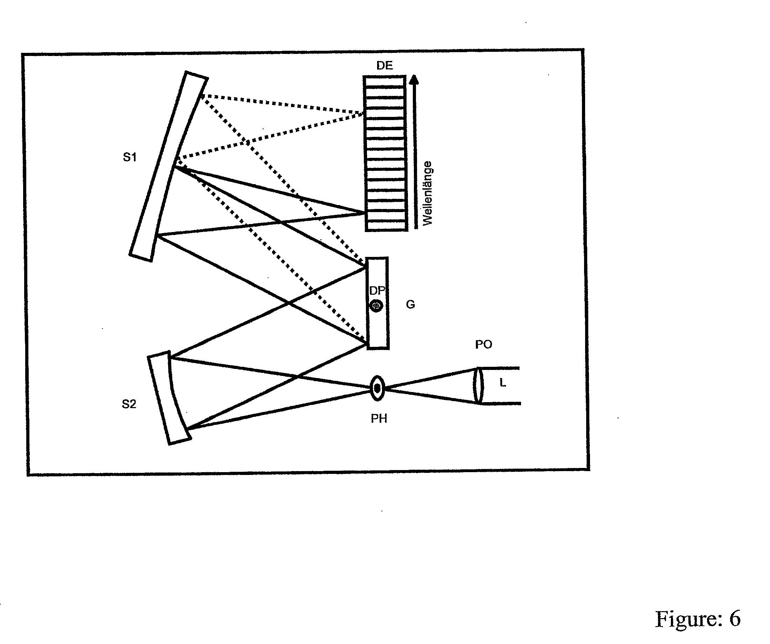

Eine mögliche Ausführungsform des optischen Strahlenganges der in Abb. 5 im Blockschaltbild gezeigten Detektoreinheit ist in Abb. 6 dargestellt. Der Aufbau beschreibt im wesentlichen einen Cerny Turner Aufbau. Bei einer konfokalen Detektion wird das Licht L der Probe mit der Pinholeoptik PO durch die konfokale Blende PH fokusiert. Bei einer nicht descanned Detektion im Falle einer Mehrphotonen-Absorption kann diese Blende entfallen. Der erste abbildende Spiegel S2 kollimiert das Fluoreszenzlicht. Anschließend trifft das Licht auf ein Liniengitter G, beispielsweise ein Gitter mit einer Linienzahl von 651 Linien pro mm Das Gitter beugt das Licht entsprechend seiner Wellenlänge in verschiedene Richtungen. Der zweite abbildende Spiegel S1 fokussiert die einzelnen spektral aufgespaltenen Wellenlängenanteile auf die entsprechenden Kanäle des Zeilendetektors DE . Besonders vorteilhaft ist der Einsatz eines Zeilen-Sekundärelektronenvervielfachers der Firma Hamamatsu H7260. Der Detektor besitzt 32 Kanäle und eine hohe Empfindlichkeit. Der freie Spektralbereich der oben beschriebenen Ausführungsform beträgt etwa 350 nm. Der freie Spektralbereich wird in dieser Anordnung gleichmäßig auf die 32 Kanäle des Zeilendetektors verteilt, wodurch sich eine optische Auflösung von etwa 10 nm ergibt. Somit ist diese Anordnung nur bedingt zur Spektroskopie geeignet. Jedoch ist ihr Einsatz in einem bildgebenden System vorteilhaft, da das Signal pro Detektionskanal aufgrund des relativ breiten detektierten Spektralbandes noch relativ groß ist. Eine Verschiebung des freien Spektralbereiches kann zusätzlich durch eine Verdrehung um DP beispielsweise des Gitters erfolgen.

In den oben beschriebenen Ausführungsform(en) detektiert jeder Einzelkanal des Detektors DE ein Spektralband des Emissionsspektrums mit einer spektralen Breite von ca. 10 nm. Für jeden Bildpunkt wird die Summe der Spektralkomponenten der einzelnen Farbstoffe, die sich an dem gerade gemessenen Bildpunkt befinden, aufgezeichnet. Zusätzlich sind beliebige Einzelkanäle auch durch den Nutzer mit Hilfes des weiter unten beschriebenen Switchregister SR abschaltbar. Dies ist besonders zur Unterdrückung einer oder mehrerer Anregungslaserlinien sinnvoll.

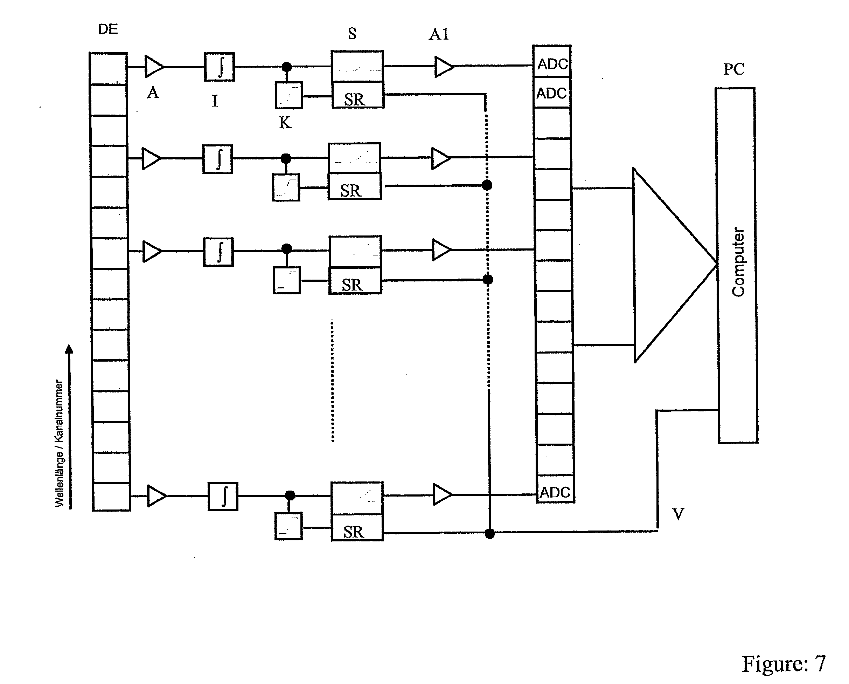

Eine Anordnung zum Auslesen der Einzelkanäle des Detektors DE ist in Abb. 7 schematisch dargestellt. Hierbei wird der an den Anoden eines Mehrkanal-PMT fließende Strom, jeweils durch den ersten Amplifier A (als StromSpannungswandler geschaltet) in eine Spannung gewandelt und verstärkt. Die Spannung wird einem Integrator I zugeführt der über eine entsprechende Zeit (z.B. Pixelverweilzeit) das Signal integriert.
Zur schnelleren Auswertung kann dem Integrator I ein Komparator K nachgeschaltet werden, der als einfacher Komparator eine Schaltschwelle hat, die bei Überschreitung ein digitales Ausgangssignal erzeugt oder der als Fensterkomparator ausgebildet ist und dann ein digitales Ausgangssignal bildet, wenn sich das Eingangssignal zwischen der oberen und unteren Schaltschwelle befindet oder wenn das Eingangssignal außerhalb (unter oder über) den Schaltschwellen liegt. Die Anordnung des Komparators bzw. des Fensterkomparators kann sowohl vor dem Integrator als auch danach erfolgen. Schaltungsanordnungen ohne Integrator (so genannter Verstärker-Mode) sind ebenfalls denkbar. Bei der Anordnung im Verstärker-Mode ist weiterhin der Komparator K auch nach entsprechender Pegelanpassung vorhanden. Der Ausgang des Komparators K dient als Steuersignal für ein Switch-Register SR, das direkt die aktiven Kanäle schaltet (online) oder der Zustand wird dem Computer über eine zusätzliche Verbindung V mitgeteilt, um eine individuelle Auswahl der aktiven Kanäle zu treffen (off-line). Das Ausgangssignal des switch-Registers SR wird direkt einem weiteren Verstärker A1 zur Pegelanpassung, für die nachfolgende A/D-Wandlung AD zugeführt. Die AD gewandelten Werte, d.h. das in jedem Bildpunkt gemessene spektral aufgelöste Fluoreszenzsignal der Probe wird über eine geeignete Datenleitung an einen Rechner (PC oder Digital-Signal-Prozessor DSP) zur Datenverarbeitung übertragen. Aus den einzelnen spektral aufgelöst gemessenen Bildpunkten werden im Anschluß je nach Scanmode **Lambda Stacks** (spektrale Verteilung pro Bildpunkt , gemessen mit den Detektionskanälen mit dispersiver Aufspaltung der detektierten Strahlung , abgelegt in Speicherelementen unter Zuordnung zu mindestens einer zusätzlichen ( Bildpunkt) Koordinaten x,y und/ oder Z und/ oder Meßzeit t) mit den zusätzlichen Koordinaten x, y, z, Zeit und Lebensdauer gebildet, wobei
■ X und Y durch SC abgerastert wird
■ Z beispielsweise durch eine Verschiebung des Präparats entlang der optischen Achse erfolgt
■ Zeit: die Datenaufnahme zu verschiedenen Zeiten erfolgt
■ Lebensdauer: die Datenaufnahme zeitaufgelöst innerhalb der Fluoreszenzlebensdauer erfolgt

Zur Vermeidung von Artefakten ist es bei einer Fluoreszenzmessung sinnvoll, das von der Probe rückgestreute Anregungslicht zu unterdrücken oder zumindest so stark abzuschwächen, dass es kleiner als oder in der gleichen Größenordnung wie das Emissionsmaximum ist. Hierzu kann der oben beschriebene zusätzliche Linienfilter oder ein entsprechend optimierter Hauptfarbteiler (MDB) zur optischen Abschwächung verwendet werden. Da die spektrale Breite der Anregungslaserstrahlung sehr viel kleiner als die vom Einzelkanal detektierte Bandbreite ist, kann die rückgestreute bzw. reflektierte Anregungsstrahlung auch durch ein gezieltes Ausschalten des entsprechenden Einzelkanals mit dem in Abb. 7 dargestellten SR erfolgen. Trifft die Anregungswellenlänge auf zwei Detektionskanäle, so kann durch eine Verdrehung des Gitters, eine Verschiebung des Zeilendetektor oder eine Verkippung von S1 oder S2 in Abb. 6 die Anregungslinie so verschoben werden, dass sie nur auf einen Detektionskanal fällt.

In den beide oben beschriebenen Anordnungen wurde vorzugsweise eine Integratorschaltung zur Detektion der Einzelkanalsignale verwendet. Uneingeschränkt kann jedoch auch eine Photonenzählung in den Einzelkanälen erfolgen und die Photonenzahlen addiert werden.

Im folgenden werden verschiedene Methoden zur Darstellung der Informationen der Probe, d.h. der Lambda Stacks beschrieben.
Ein durch oben beschriebenes Verfahren aufgenommener Lambda Stack ist in seiner einfachsten Form ein Stapel von x-y-Bildern, die die Fluoreszenzintensitätswerte aus benachbarten, sehr schmalen Wellenlängenbereichen enthalten. Komplexere Daten erhält man durch die Kombination der Aufnahme dieser Lambda Stacks mit z-Stapeln oder/und Zeitserien.

Die Aufbereitung dieser Daten für den Betrachter kann in verschiedener Weise erfolgen:
a) Lambda-Maximum-Projektion
   Hier wird ein Graustufen-Bild aus dem Lambda Stack erzeugt, indem für jede x-y-Pixel-Position über die Wellenlängenbereiche der maximale Intensitätswert ermittelt wird, der die Helligkeit des entsprechenden Pixels des Projektionsbildes definiert.
b) Lambda-Coded-Projektion
   Hierbei wird wie bei a) eine Lambda-Maximum-Projektion berechnet und jedes Pixel mit der Farbe versehen wird, die der mittleren Wellenlänge des Wellenlängenbereiches entspricht, aus dem das hellste Pixel des Lambda Stacks stammt.
c) Galerie-Ansicht für einen einfachen Lambda Stack (xyλ)
   Hier werden die Einzelbilder des Lambda Stacks zumindest teilweise in einer Serie dargestellt. Hierbei kann zusätzlich für jedes Bild die mittlere Wellenlänge des Bereichs, in dem die Intensitäten aufgenommen wurden, angezeigt werden.
d) Galerie-Ansicht für komplexere Lambda Stacks
   Werden xy-Lambda Stacks über z oder/und über die Zeit aufgenommen, so können Schieber verwendet werden, um in der Galerie die jeweilige Serie einer z-Ebene oder eines Zeitpunktes anzeigen zu lassen. In einer anderen Form können alle xy-Bilder der Aufnahme gleichzeitig dargestellt werden, indem die spektral unterschiedlichen Bilder in Zeilen und die zeitlich bzw. in z-Ebene unterschiedlichen Bilder in Spalten dargestellt werden. Es kann zwischen folgenden Galerie-Ansichten gewählt werden: xy-λ, xy-z, xy-t, xy-λ-z, xy-λ-t, xy-z-t; wobei man mittels Schiebern durch die jeweils nicht genannte Dimension blättern kann.
   Die Kombination von Lambda-Max oder Lambda-Coded-Projektionen mit der Gallerie-Ansicht in Zeilen und Spalten ermöglicht die simultane Darstellung von xy-z-t-λ-Informationen.
e) Orthogonalschnitte durch Lambda Stacks
   Diese Darstellung zeigt eine selektierte λ-Ebene eines Lambda Stacks mit jeweils einer horizontalen und vertikalen Markierungslinie, die frei positionierbar sind. An diesen Linien wird der Lambda Stack durchschnitten und das entstehende Schnittbild neben (y-Schnitt) und über (x-Schnitt) die λ-Ebene projiziert. Eine Pseudo-Echtfarbkodierung kann optional durchgeführt werden. Hierbei wird jedem Wellenlängenbereich seine entsprechende Spektralfarbe zugeordnet. Durch Überlagerung der einzelnen Farbanteile in einem Bild entsteht ein farbgetreues Abbild der Probe.

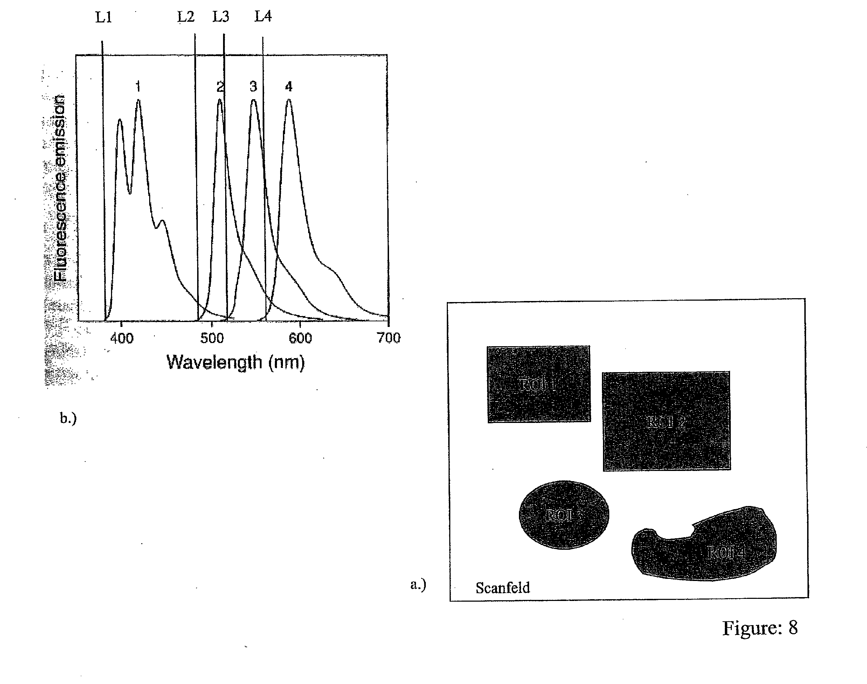

Referenzspektren sind z.B. die Emissionsspektren einzelner Farbstoffe in Reinstform, d.h. in Lösungsmittel gelöst bzw. gebunden in einzelnen diskreten Regionen der zu untersuchenden Probe. Die Auswahl der Regionen zur Generierung der Referenzspektren kann mit den folgenden Verfahren erfolgen.
Lambda Stacks beinhalten für jedes Pixel zusätzlich die spektrale Information. Abb. 8a zeigt schematisch eine Verteilung von verschiedener ROIs (ROI 1-4) in einem LSM-Bild, die beispielsweise verschieden angefärbte Regionen einer Zelle repräsentieren. In Abb. 8b sind typische zugehörige Emissionsspektren 1-4 mit ihren Anregungswellenlängen (L1-L4) dargestellt. Die Einstellung der ROIs durch den Nutzer kann beispielsweise wie folgt geschehen: Nach der Aufnahme eines Lambda Stacks unter Verwendung aller oder der meisten zum Anregen der Farbstoffe in den einzelnen ROI-s notwendigen Anregungslinien können Summenkanäle zwischen den einzelnen Anregungslaserlinien gebildet werden (L1 bis L2, L2 bis L3, L3 bis L4 und L4 gemäß Fig.7b bis zur maximalen Emissionswellenlänge). Diese Summenkanäle entsprechen Teilen der Fluoreszenzbänder der einzelnen Farbstoffe. Weiterhin erfolgt eine gleichzeitige Summation der Signale verschiedener Farbstoffe in gleichen Summenkanälen aufgrund der starken Überlagerung. Diese Summenkanäle werden im Anschluß farbkodiert in verschiedenen Bildkanälen abgelegt und miteinander überlagert dargestellt. Aufgrund der verschiedenen lokalen Farbmischungen in den Bildkanälen können die verschiedenen ROIs durch den Nutzer oder durch automatische Mustererkennung lokalisiert werden.
In einem 2. Verfahren zur Einstellung der verschiedenen ROIs erfolgt eine Vermessung des Fluoreszenzschwerpunktes CZ 7447. Hierzu werden im Detektor alle Einzelkanäle, die mit Anregungslaserlinien bestrahlt werden abgeschalten. Jede ROI besitzt aufgrund der veränderten Emissionseigenschaften der jeweils verwendeten Farbstoffe einen charakteristischen Fluoreszenzschwerpunkt.
Somit können die verschiedenen ROIs durch die Lage des charakteristischen Farbschwerpunktes unterschieden und getrennt sichtbar gemacht werden.

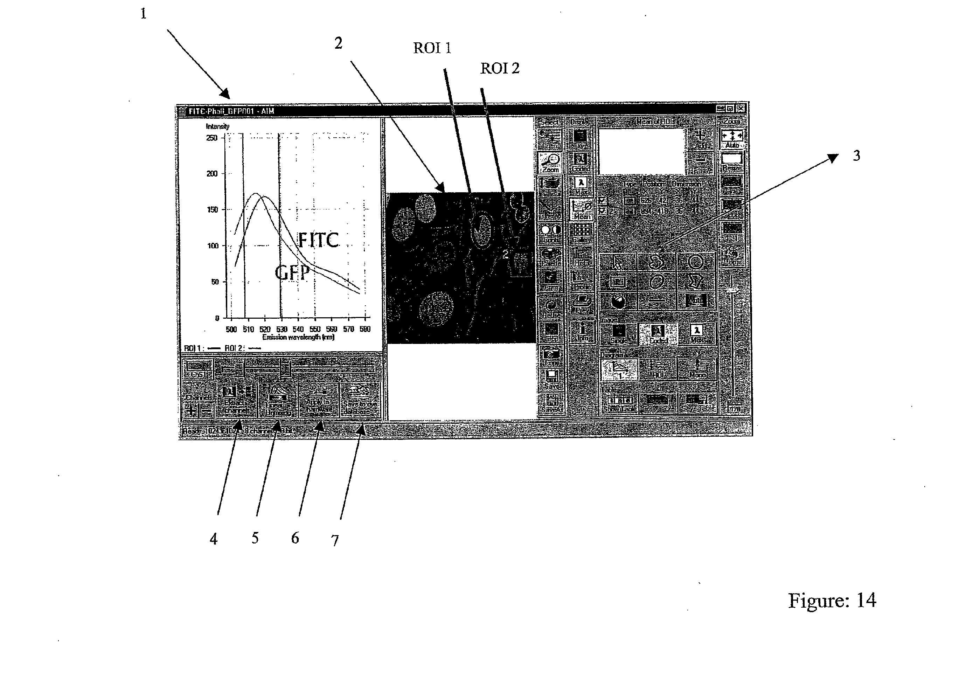

Zur Sichtbarmachung der spektralen Signaturen beliebig ausgewählter Probenstellen kann der Benutzer die ROI-Funktion einsetzen (ROI: Region Of Interest; s. Abb. 14). Hierbei werden mit einem Zeichenwerkzeug 3 (z. B. Polygon, Ellipse oder geschlossener Spline) ein Bereich (in Abb. 14 ROI 1 und ROI 2) aufgenommenen Probe im Bild 2 markiert und der Graph der entsprechenden spektralen Signatur graphisch (Diagramm 1) durch Mittelwertbildung der im ROI eingeschlossenen x-y-Pixel für jeden λ-Ebene des Lambda Stacks ermittelt werden.
Prinzipiell können mehrere Spektralsignaturen verschiedener ausgewählter Probenstellen gleichzeitig dargestellt werden, entweder in einem gemeinsamen oder in getrennten Diagrammen 1.
Die visualisierten Spektralsignaturen 1 geben Aufschluss über die spektrale Verteilung der Fluoreszenzemission in den gewählten Probenstellen.
Bei Darstellung mehrerer Spektralsignaturen verschiedener ROIs kann beispielsweise ermittelt werden, ob die Emissionsspektren der verwendeten Farbstoffe sich signifikant überlagern.

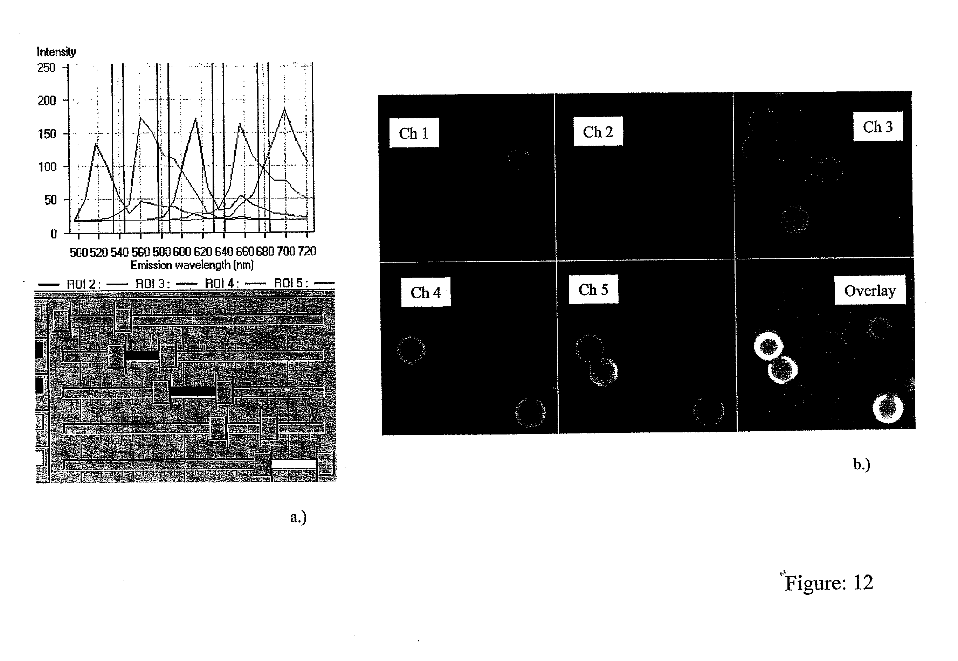

Die Spektralsignaturen der verschiedenen ROIs können wie in Abb. 12 gezeigt zur Erzeugung eines farbkodierten Mehrkanalbildes (Bedienelement "Extract to Channels", Abb. 14 (4)) dienen. Es können mit Hilfe der Spektralsignaturen Wellenlängenbereiche ausgewählt (Abb. 12a: ROI 1 bis 5) und die Intensitätswerte der entsprechenden Ebenen des Lambda Stacks z. B. durch Summation oder Mittelwertbildung über die entsprechenden Wellenlängenbereiche für jeden Bildpunkt zusammengefaßt werden, um so ein Mehrkanalbild (Abb. 12b) zu erzeugen, wobei jeder Bildkanal einen Farbstoff repräsentiert (Ch 1 bis CH 5)).
Zusätzlich können diese Einstellung zur elektronischen Summation (siehe Abb. 7) der Einzelkanäle verwendet werden ("Extract to Hardware", Abb. 14 (6)). Anschließend können Mehrkanalbilder mit den entsprechenden Einstellungen direkt gescannt werden.

Für eine spätere Wiederverwendung können die spektralen Signaturen einzelner ROIs, d.h. einzelner Farbstoffe in ihrer spezifischen Umgebung in einer Spektral-Datenbank (Abb. 14 (7)) gespeichert werden, wobei zusätzlich zu den Daten der Graphen auch die für die Aufnahme des Lambda Stacks spezifischen Parameter, wie verwendete Laserlinien, Intensitäten, Filterkonfigurationen (MDB, NFT, EF) und Einstellung des Detektors (Verstärkung, Integrationszeit, Pinholeposition und -durchmesser), sowie zusätzliche Kommentare zur Umgebung / Präparation des zu untersuchenden Präparates gespeichert werden können.

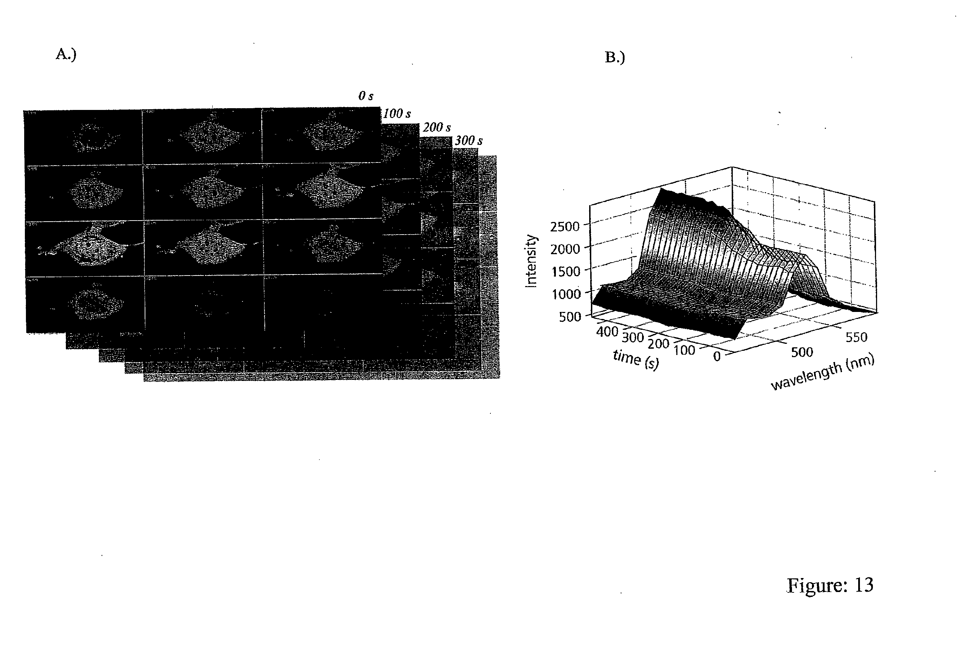

Bei einer Aufnahme von Lambda Stacks über einen Zeitraum können Spektralsignaturen zu verschiedenen Zeitpunkten ermittelt und in einer Serie zusammengefaßt werden. Im Anschluß können diese Daten in einer 3D-Darstellung, z.B. entsprechend Abb. 13b visualisiert und die zeitliche Änderung der Spektralsignaturen in verschiedenen ROIs vermittelt werden. Diese Darstellung kann vorteilhaft bei der Auswertung von Experimenten wie FRET (Fluorescence Resonance Energy Transfer) oder FRAP (Fluorescence Recovery After Photobleaching) mit zwei oder mehr Fluoreszenzfarbstoffen gleichzeitig eingesetzt werden (s. Abb. 13). Dargestellt in Teilbild b ist das Fluoreszenzsignal (Intensity) in Abhängigkeit von der Wellenlänge (wavelength) und dem Zeitpunkt (time). Man erkennt, dass das Signal im Wellenlängenbereich von 530 nm bis 560 nm mit der Zeit zunimmt. Eine weitere Darstellungsform ist in Abb. 13a gezeigt. Dargestellt sind die spektralen Einzelkanäle zu verschieden Zeitpunkten. Jedes Teilbild repräsentiert hierbei beispielsweise einen Wellenlängenbereich von 10 nm.

Algorithmen zur Analyse, z.B. zur selektiven Darstellung der Beiträger einzelner Farbstoffe zum gesamten von der Probe abgestrahlten Fluoreszenzsignal werden im folgenden beschrieben. Die Analyse kann quantitativ oder qualitativ erfolgen. Bei einer quantitativen Analyse wird pro Bildpunkt der Beitrag (d.h. die Konzentration) jedes einzelnen Farbstoffs zum gesamten von der Probe abgestrahlten Fluoreszenzsignal berechnet. Zum Einsatz kommen Algorithmen wie z.B. eine lineare Entmischungsanalyse (Lit.: Lansford, et al.; Journal of Biomedical Optics 6(3), 311-318, (July 2001)). Zur Analyse werden so genannte Referenzspektren benötigt. Diese beschreiben das Fluoreszenzspektrum eines einzelnen Farbstoffs. Die Genauigkeit der Ergebnisse hängt entscheidend von der Genauigkeit der Referenzspektren ab. Deshalb erfolgt erfindungsgemäß in einem Verfahren die Aufnahme der Referenzspektren simultan während der Untersuchung des Präparats (s.u.). Die Beiträge der jeweiligen Farbstoffe werden in verschiedene Bildkanäle eingeordnet, wobei jedem Bildkanal eine spezifische Farbe zugeordnet wird. Die Helligkeit der Farbe wird durch die Größe des Beitrags bestimmt. Im Anschluß können die einzelnen Bildkanäle überlagert in einem Bild dargestellt werden und es entsteht ein **farbkodiertes Bild (s. o. Lambda coded).** Bei einer qualitativen Analyse erfolgt eine Klassifizierung, d.h. jedem Bildpunkt wird jeweils nur der Farbstoff, der den größten Beitrag zum gesamten von der Probe abgestrahlten Fluoreszenzsignals erzeugt, zugeordnet. Die Zuordnung erfolgt wiederum in einem Bild in verschiedene Bildkanäle, wobei jedem Bildkanal eine spezifische Farbe zugeordnet werden kann. Verwendet werden hierzu Algorithmen wie z.B. eine principal component analysis (PCA / Lit.: I.T. Joliffe, *Principal Component Analysis,* Springer-Verlag, New York, 1986.). Man erhält durch diese Art von Algorithmen eine so genannte Maskierung des Bildes (**Farbstoffmaske**), wobei sich in Bereichen gleicher Farbe identische Farbstoffe befinden.

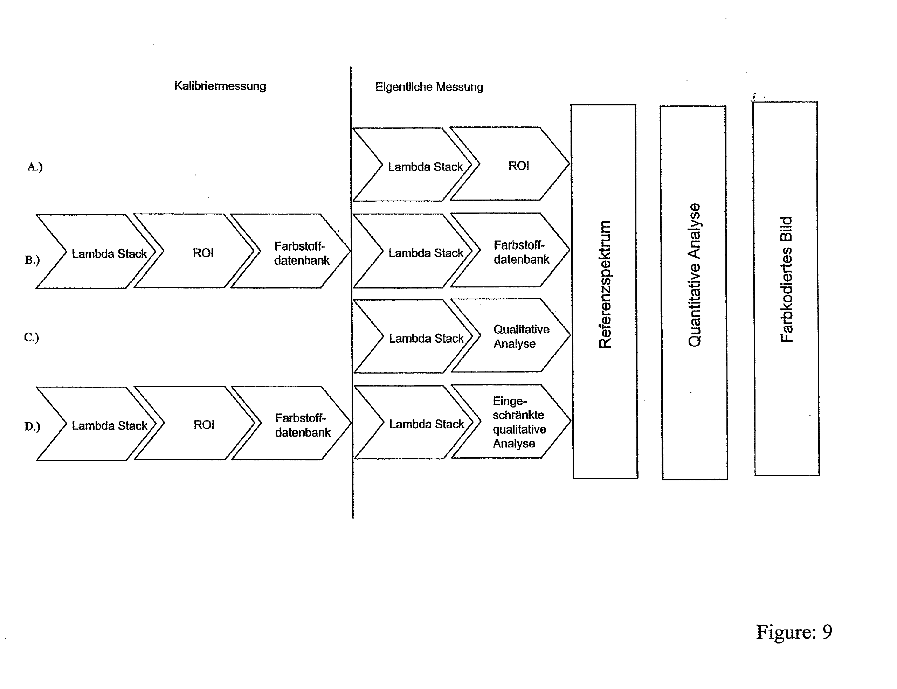

Im folgenden werden Verfahrensabläufe zur Trennung von Farbstofffluoreszenzen erläutert.
Für den Fall, daß die Spektralsignatureh der selektierten ROls jeweils nur das Emissionssignal von genau einem der verwendeten Farbstoffe in der Probe repräsentieren (Referenzspektren), so können diese besonders vorteilhaft für eine quantitative Analyse (z.B. digitale Entmischung, Abb. 14 (5)) der Emissionssignale verwendet werden (Abb. 9a). Diese hat als Eingangsdaten den zugrundeliegenden Lambda Stack sowie die Spektralsignaturen von n gewählten Probenstellen (ROI), wobei n die Anzahl der in der Probe verwendeten Farbstoffen ist. Das Ergebnis der quantitativen Analyse (z.B. Entmischung) ist ein Bild aus n einzelnen Bildkanälen, die jeweils nur die Information der Emissionssignale von einem Farbstoff enthalten.

Eine weitere Vorgehensweise zur quantitativen Analyse (z.B. digitalen Entmischung) der Emissionssignale verwendet als Eingangsdaten einen Lambda Stack und dazu Referenzspektren, die zuvor in einer Spektren-Datenbank gespeichert wurden (Abb. 9b). Diese Referenzspektren können einem Experiment (Kalibriermessung) entstammen, bei dem eine Probe (oder spezifische Regionen) mit jeweils nur genau einem Fluoreszenzfarbstoff markiert wurde. Diese Vorgehensweise ist beispielsweise erforderlich, wenn die Farbstoffe im eigentlichen Experiment überwiegend ko-lokalisieren und so nicht für jeden Farbstoff eine Probenstelle mit reinem Emissionssignal, ohne spektrales Übersprechen einer anderen Emission, gefunden werden, d.h. kein ROI eingezeichnet kann.
Zusätzlich können die Referenzspektren aus der Datenbank vor Aufnahme des Lambda Stacks durch den Nutzer ausgewählt werden und während der Akquisition sofort eine quantitative Analyse (z.B. digitale Entmischung) des Lambda Stacks durchgeführt werden. Als Ergebnis wird das n-kanalige Bild auf dem Bildschirm angezeigt. Eine speicherintensive Zwischenspeicherung der Lambda Stack-Daten kann hierbei entfallen.

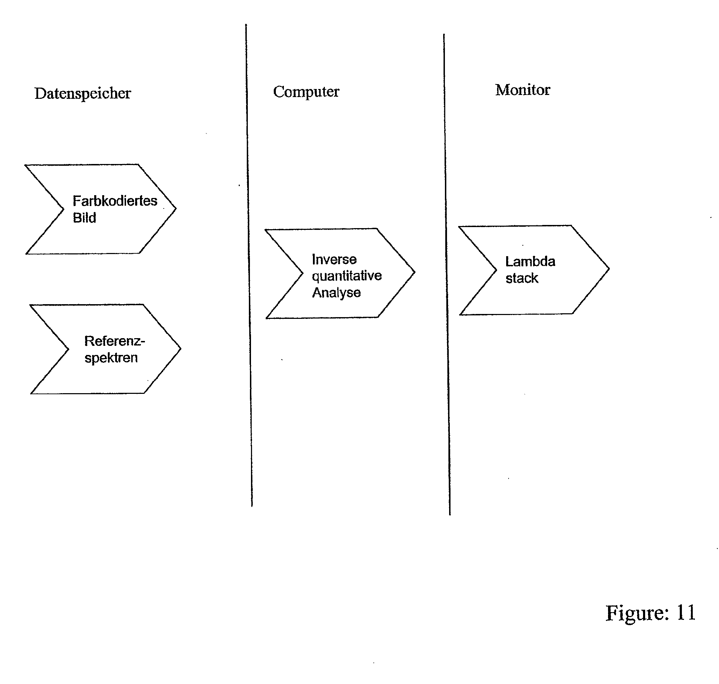

In einem weiteren in Abb. 11 schematisch dargestellten Verfahren werden quantitativ analysierte Datensätze (farbkodiertes Bild) und die Referenzspektren entsprechend der Anzahl der Farbstoffe auf einem Datenträger anstatt des Lambda Stacks abgelegt. Dies hat den Vorteil, dass die Größe des Datensatzes ohne gravierenden Verlust an Signalinformation gespeichert werden kann. Wird beispietsweise ein Lambda Stack mit 32 Einzelkanälen in 512x512 Bildpunkten und 8 bit detektiert so beträgt die Größe des Bildstapels ca. 16 Megabyte. Durch Speicherung des farbkodierten Bildes verringert sich die Größe des Datensatzes um einen Faktor 32 auf ca. 0.5 Megabyte zuzüglich der Referenzspektren. Die Anzahl der Datenpunkte in den Referenzspektren beträgt 32 multipliziert mit der Anzahl der Farbstoffe. Aus den abgelegten Daten (Referenzspektren) und farbkodierten Bild kann im Anschluß im Computer wieder der Lambda Stack berechnet werden. Die Berechnung erfolgt im einfachsten Falle durch eine Multiplikation der Referenzspektren mit den jeweiligen Bildkanälen des farbkodierten Bilds. Eine Datenreduktion ist insbesondere bei der Aufnahme von so genannten Zeitserien oder von Zeitserien mit dreidimensionaler Bildinformation nötig.

In einem weiteren Verfahren, dessen Ablaufschema in Abb. 9C dargestellt ist erfolgt ausgehend vom Lambda Stack im ersten Schritt eine qualitative Analyse. Durch diese Analyse können zum einen Bereiche im Präparat aufgesucht werden, in denen sich gleiche Farbstoffe räumlich verteilt befinden. Zum anderen können automatisch ohne Eingriff des Nutzers die für die anschließende quantitative Analyse benötigten Referenzspektren generiert werden. Für die qualitative Analyse z.B. PCA sind keine zusätzlichen Eingangsparameter außer dem Lambda Stack nötig. Die so gewonnenen Referenzspektren und der Lambda Stack dienen im Anschluß als Eingangsparameter für eine quantitative Analyse deren Ergebnis wiederum eine farbkodiertes Bild ist.
In einem weiteren Verfahren nach Abb. 9D erfolgt eine eingeschränkte qualitative Analyse des Lambda Stacks. Bei der eingeschränkten qualitativen Analyse werden nur Spektren zugelassen, die vorher durch den Nutzer definiert worden sind und z.B. in einer Farbstoffdatenbank abgelegt wurden.

Der Algorithmus sucht aus diesen vordefinierten Farbstoffspektren die Exemplare (d.h. Farbstoffe) heraus, die am besten zu dem spektral aufgelöst gemessenen Fluoreszenzsignal passen und definiert somit wiederum die Referenzspektren. Die so gewonnenen Referenzspektren und der Lambda Stack dienen im Anschluß als Eingangsparameter für eine quantitative Analyse deren Ergebnis wiederum eine farbkodiertes Bild ist.

**Anwendungen Farbstoffe mit Verschiebungen des Emissionsschwerpunkts** Emissionsratiofarbstoffe werden in verschiedenen biomedizinischen Anwendungen zum Beispiel zur Bestimmung von Ionen- und Metabolitkonzentrationen oder deren Änderungen z.B. in zellulären Kompartimenten oder Lösungen eingesetzt.

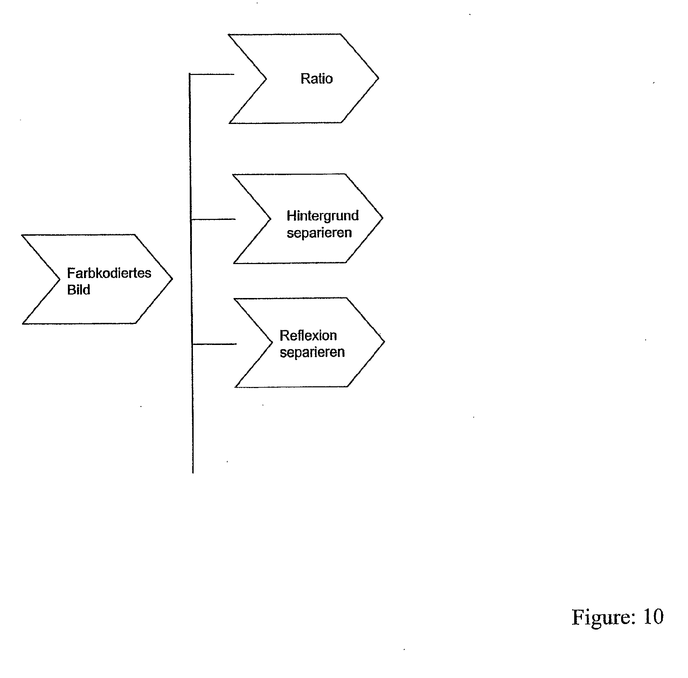

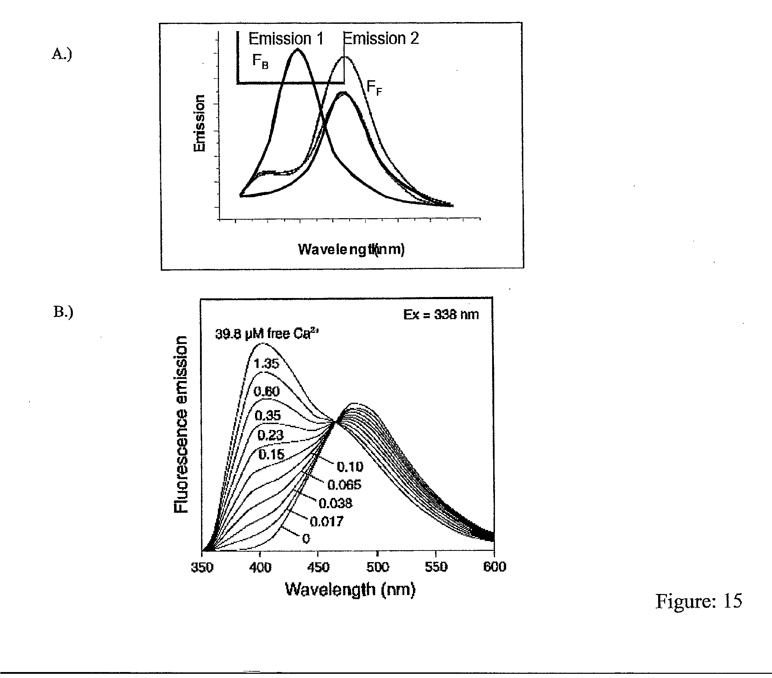

Die Reversible Interaktion mit dem spezifischen Bindungspartner (Liganden wie z.B.: Ca²⁺, Mg²⁺, H⁺) resultiert in einer spektralen Verschiebung der Fluoreszenzemission dieser Farbstoffe (Indo-1, SNARF; Molecular Probes Inc.). Zu dem zu einem gegebenen Zeitpunkt im Beobachtungsvolumen gemessenen Emissionsspektrum tragen in der Regel zwei Zustände des Farbstoffs, F_{F} (freier Farbstoff) und F_{B} (Farbstoff mit gebundenem Liganden) (Abb. 15a) bei, deren relative Anteile in einem gegebenen Volumen wiederum von der Affinität zwischen Farbstoff und Ligand, beschrieben durch die Dissoziationskonstante (K_{D}), gekennzeichnet ist. Damit ist das Verhältnis der Fluoreszenzen von F_{F} und F_{B} ein Maß für die Konzentration des Liganden. Eine Anwendung der oben beschriebenen Verfahren kann darin bestehen, mit Hilfe der oben beschriebenen Anordnung und vom Nutzer festzulegenden ROls, die zu den Bindungszuständen F_{F} und F_{B} gehörigen Emissionsspektren (Abb. 15b) im untersuchten biologischen System (*in vivo*) oder in Lösungen (*in vitro*) zu bestimmen. Für ionensensitive Emissionsratiofarbstoffe gelingt dies z.B. durch Einstellung von ionenfreien bzw. Sättigungsbedingungen. Die Referenzspektren können auch mit Hilfe einer qualitativen Analyse ermittelt werden. Hierbei ist es vorteilhaft die Anzahl der Farbstoffkomponenten (im beschriebenen Verfahren 2 Komponenten F_{F} und F_{B} entsprechend Abb. 15a) durch den Nutzer vorzugeben. Diese Refernzspektren können zur Berechnung des Beitrags der Farbstoffzustände (F_{F} bzw. F_{B}) zu den Fluoreszenzemissionen in den Bildpunkten eines Lambda Stacks oder einer Serie zu verschiedenen Zeitpunkten oder verschiedenen Probenebenen aufgenommenen Lambda Stacks mit Hilfe der quantitativen Analyse (z.B. linearen Entmischungs-Algorithmen) genutzt werden (Figure 9). Durch anschließende Pixel-für Pixel-Division der in zwei verschiedene Bildkanäle eingeordneten Signale ergibt sich ein von der Farbstoffkonzentration unabhängiges sublineares Maß der Ligandenkonzentration R (Ratio; Abb. 10), dessen räumliche Verteilung und/oder zeitliche Dynamik. Anhand von *in vitro-* oder *in vivo* Eichdaten, die mit dem jeweiligen Emissionsratiofarbstoff und bekannten Ligandenkonzentrationen erhoben wurden, lassen sich aus den Werten R absolute Konzentrationsangaben ermitteln (Gleichungskalibrierung, Titrations-kalibrierung).

Entsprechend können nach dem beschriebenen Verfahren zum Beispiel auch Mischungen von 2 Farbstoffen eingesetzt werden, (1) die mit dem gleichen Liganden interagieren, (2) deren Emissionsschwerpunkte sich unterscheiden nicht aber mit der Ligandenbindung verändern und (3) deren Fluorezenzquantenausbeute, sich in Abhängigkeit von der Ligandenbindung entgegengesetzt verändern (z.B.: Fluo-3 und Fura Red, Molecular Probes Inc.).

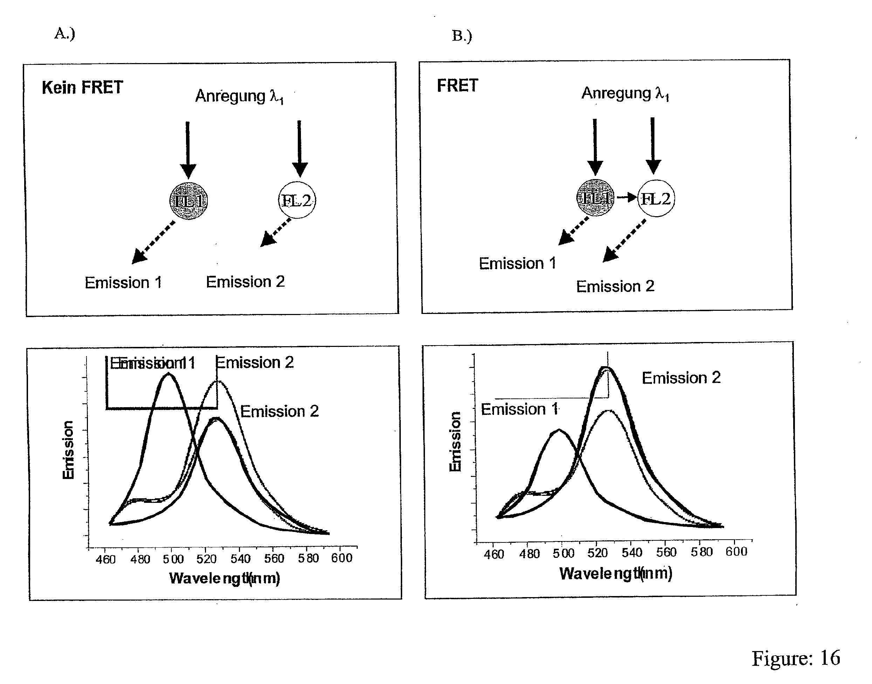

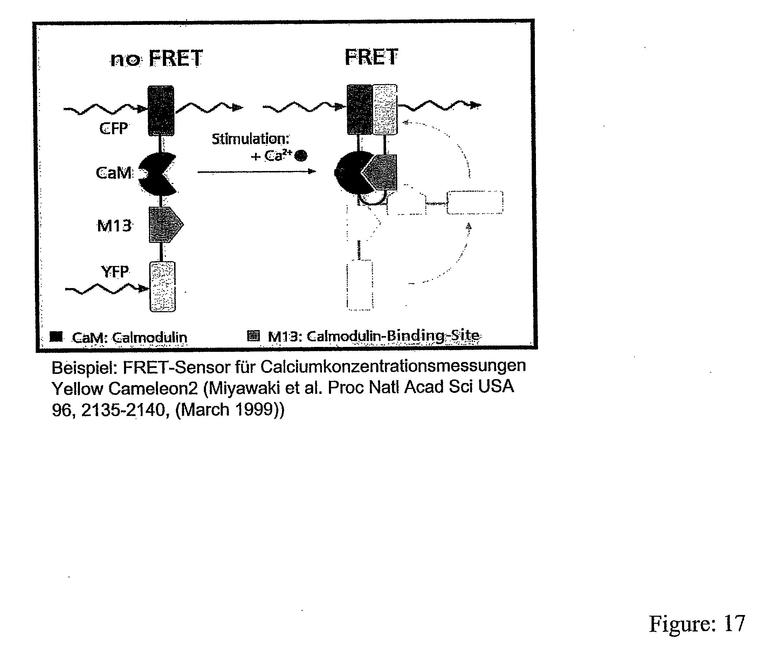

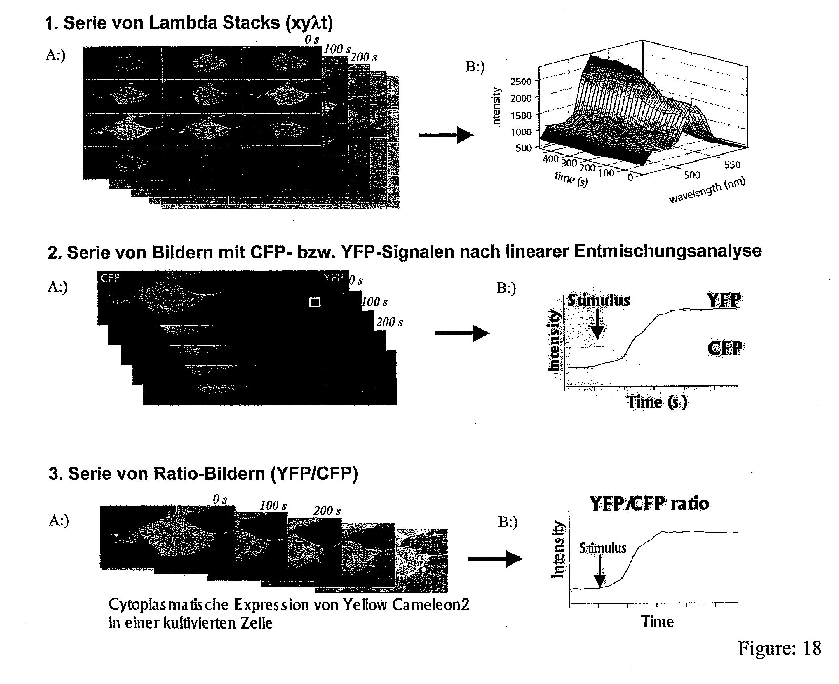

FRET (Fluoreszenz Resonanz Energie Transfer) ist der strahlungslose Transfer von Photonenenergie von einem angeregten Fluorophor (dem Donor) an einen anderen Fluorophor (den Akzeptor). Voraussetzung sind u.a. Überlappungen der Donor-Emissions- und Akzeptor-Anregungsspektren und enge räumliche Assoziation von Donor und Akzeptor. In biomedizinischen Anwendungen wird der FRET-Effekt z.B dazu genutzt Ionen-oder Metabolitkonzentrationen (Ca²⁺, cAMP, cGMP) oder andere z.B. ligandenabhängige Strukturveränderungen (z.B. Phosphorylierungszustand von Proteinen, Konformationsänderungen von DNA) zu bestimmen und zu verfolgen. Dies gelingt durch Kopplung der FRET-Partner, Donor und Akzeptor (z.B. die synthetischen Fluorochrome FITC und Rhodamin oder die genetisch kodierten fluoreszierenden Proteine CFP und YFP) an ein Molekül, das durch die spezifische Interaktion mit dem zu beobachtenden lonen, Metaboliten oder Liganden Veränderungen in seiner Sekundärstruktur erfährt (Beispiel Miyawaki et al.; Proc Natl Acad Sci USA 96, 2135-2140, (March 1999); Figure 17) oder an je eines von zwei Molekülen, die permanent oder in Abhängigkeit von Umgebungsbedingungen interagieren. Abb. 16 zeigt das Emissionsspektrum für die FRET Partner für unterschiedliche Abstände zwischen Donor und Akzeptor (a - großer Abstand kein FRET / b - kleiner Abstand FRET Wechselwirkung). In beiden Fällen sind Unterschiede in den Anteilen des freien und liganden-gebundenen FRET-Systems im Beobachtungsvolumen mit spektralen Unterschieden in der Fluoreszenzemission des FRET-Systems verbunden. Bei bevorzugter Anregung der Donorfluoreszenz drücken sich Zunahmen oder Abnahmen der Ligandenbindung in gegenläufigen Veränderungen der Amplituden der Fluoreszenzemissionen der beiden FRET-Partner aus (Figure 16).
Eine Nutzung des hier beschriebenen Verfahrens z.B. für die genannten FRET-Messungen besteht darin, die Probe mit Licht nahe dem Anregungsoptimum des FRET-Partners 1 (Donoranregung, λ₁) zu bestrahlen. Der am Multikanaldetektor in Form eines Lambda Stacks oder einer Serie von Lambda Stacks (Z oder t) erfasste Spektralbereich umfasst die Emissionsbereiche beider FRET-Partner (Figure 18 / Teilbild 1a). Durch Definition von ROIs (siehe oben) kann das zeitliche Verhalten der Spektralsignaturen sichtbar gemacht werden (Teilbild 1b).
Die als Lambda Stacks aufgenommenen Fluoreszenzsignale werden dann der quantitativen Analyse (z.B. linearen Entmischungsanalyse) zu unterzogen (Figure 18 / Teilbild 2). Die dazu benötigten Referenzspektren können zunächst z.B. in Präparationen oder Lösungen, die nur einen der FRET-Partner enthalten (*in vivo* oder *in vitro*), durch Aufnahme eines Lambda Stacks bei der Anregungswellenlänge (λ₁, Donoranregung) und Nutzung der ROI-Funktion ermittelt werden (siehe oben bzw. Abb. 9). Definition von ROls in den aus der quantitativen Analyse resultierenden Kanälen ermöglicht, die Fluoreszenzintensitäten der FRET-Partner und ihre zeitlichen Veränderungen grafisch darzustellen. Pixelweise Division der aus der quantitativen Analyse (Entmischungsanalyse oder PCA) resultierenden beiden Bildkanäle ergibt Bilder deren Pixelwerte Maße für den Fluoreszenz Resonanz Energie Transfer bzw. FRET-System-Liganden-Interaktion repräsentieren (Figure 18 /Teilbild 3) und anhand geeigneter Eichdaten (Titrationseichung u.a.) z.B. die zu beobachtenden Ionen-, Metabolit und Ligandenkonzentrationen errechnet werden können.

Eine weitere Anwendung der oben beschriebenen Verfahren besteht in der Separierung von Signalen, die für jeweilige Untersuchung nicht von Interesse sind bzw. ihre Analyse stören. Dies können z.B. Hintergrundlicht, Autofluoreszenzen, rückgestreutes Anregungslicht oder Raumlicht sein. Wird zunächst die spektrale Verteilung dieser Signale in nicht weiter angefärbten Kontroll-Präparationen (Autofluoreszenz, rückgestreutes Anregungslicht) oder in Abwesenheit der Präparate (Hintergrundlicht, Raumlicht) ermittelt, können die erhaltenen Spektren wie die Referenzspektren der zu untersuchenden Farbstoffe in die lineare Entmischungsanalyse mit einbezogen werden (Figures 9 und 10). Nach Entmischung werden sie damit einem separaten Bildkanal zugewiesen und von den zu untersuchenden Signalen getrennt, die damit gesondert betrachtet werden können.

Zusammenfassende Begriffserklärungen:
λ-stack
   spektrale Verteilung pro Bildpunkt, gemessen mit den Detektionskanälen mit dispersiver Aufspaltung der detektierten Strahlung, abgelegt in Speicherelementen unter Zuordnung zu mindestens einer zusätzlichen (Bildpunkt) Koordinaten x,y und/ oder Z und/ oder Meßzeit t
Quantitative Analyse
   Pro Bildpunkt wird der Beitrag (der Anteil) jeder Spektralsignatur zum gesamten von der Probe kommenden Signal (z.B.Fluoreszenzsignal) berechnet (Entmischungsverfahren). Die Berechnung erfolgt anhand von Referenzspektren, die das Spektrum der einzelnen Spektralsignasturen (z.B. Farbstoffe) charakterisieren und in einer Datenbank abgespeichert, aus dem Bild generiert (ROI) oder durch qualitative Analyse (PCA) generiert wurden sind.
Bildkanäle:
   Jedem gewählten Spektralbereich wird eine Farbe bei der bildlichen Darstellung der Probe zugeordnet (Falschfarbendarstellung), wobei die Intensität der Farbe dem Beitrag des Farbstoffs/ Spektralsignatur entspricht, gemessen wird beispielsweise in mehreren Detektionskanälen durch entsprechende Filter.

Farbkodiertes Bild (Mischbild) entsteht durch bildliche Darstellung mehrerer Farben überlagert, wenn in einem Probenbereich mehrere Spektralsignaturen / Farbstoffe enthalten sind:
Qualitative Analyse
   Jedem Bildpunkt wird die Spektralsignatur/ Farbstoff zugeordnet, der den größten Beitrag des gesamten von der Probe kommenden Signals erzeugt.
Farbstoffmaske:
   Spektralsignaturen / Farbstoffe an verschiedenen Orten werden mit unterschiedlichen Farben dargestellt, wobei die Intensität jeweils gleichmäßig ist.
ROI:
   Vom Nutzer ausgesuchte und markierte Regionen , wobei durch qualitative Analyse Gebiete gleiche Spektraisignaturen / Farbstoffe auch automatisch aufgesucht und markiert werden können

## Patentansprüche

1. Verfahren zur Untersuchung von Proben,
wobei für Probenpunkte oder Punktverteilungen eine spektrale Aufspaltung der von der Probe kommenden Strahlung erfolgt,
vorzugsweise zum Betrieb eines Laser-Scanning - Mikroskopes oder einer Fluoreszenz-Screeninganordnung oder eines Durchflußzytometers,
wobei ein λ- stack erzeugt wird, indem die spektrale Verteilung mit einzelnen Detektionskanälen gemessen wird und die Signale der Detektionssignale mit mindestens einer der Ortskoordinaten x,y oder z und/ oder dem Meßzeitpunkt t zugeordnet abgespeichert werden

2. Verfahren nach Anspruch 1,
wobei über einer Farbe oder einem Spektralbereich zugeordnete Bildkanäle und farblicher Zuordnung Falschfarbenbilder erzeugt werden

3. Verfahren nach mindestens einem der vorangehenden Ansprüche,
wobei über Eingabemittel oder automatisch ROI als interessierende Probengebiete markiert werden

4. Verfahren nach mindestens einem der vorangehenden Ansprüche,
wobei die ROI zur Bildung von Referenzspektren herangezogen werden

5. Verfahren nach mindestens einem der vorangehenden Ansprüche,
wobei ein farbkodiertes Bild durch Überlagerung mehrerer Bildkanäle erzeugt wird , wenn in einem Probenbereich mehrere Farbstoffe enthalten sind

6. Verfahren nach mindestens einem der vorangehenden Ansprüche,
wobei über Eingabemittel ROI als interessierende Probegebiete markiert werden , aus denen Referenzspektren gebildet werden und mittels der Referenzspektren durch quantitative Analyse ein farbkodiertes Bild erzeugt wird

7. Verfahren nach mindestens einem der vorangehenden Ansprüche,
wobei über Eingabemittel ROI als interessierende Probengebiete markiert werden und mittels Referenzspektren aus einer abgespeicherten Datenbank eine quantitative Analyse erfolgt

8. Verfahren nach mindestens einem der vorangehenden Ansprüche,
wobei eine qualitative Analyse erfolgt und interessierende Probengebiete als ROI gebildet werden die zur Bildung und Abspeicherung von Referenzspektren herangezogen werden.

9. Verfahren nach mindestens einem der vorangehenden Ansprüche,
wobei Eingabemittel zur Auswahl von Farbstoffen vorgesehen sind, die mittels einer Farbstoffdatenbank quantitativ analysiert und dargestellt werden

10. Verfahren nach Anspruch 9,
wobei die Farbstoffdatenbank von markierten ROI erzeugt wird

11. Verfahren nach mindestens einem der vorangehenden Ansprüche,
wobei aus einem durch Überlagerung mehrerer Bildkanäle entstehenden farbkodierten Bild
zur Bestimmung der lonenkonzentration das Verhältnis der spektralen Anteile gebildet wird

12. Verfahren nach mindestens einem der vorangehenden Ansprüche,
wobei Bildkanäle oder Detektionskanäle ausgeschalten werden, die unerwünschten Signalen wie Autofluoreszenz oder Reflexion oder unspezifischer Fluoreszenz entsprechen

13. Verfahren nach mindestens einem der vorangehenden Ansprüche,
wobei aus einem abgespeicherten farbkodierten Bild und einem Referenzspektrum λ- stacks berechnet werden, die der gemessenen spektralen Verteilung mit einzelnen Detektionskanälen entsprechen

14. Verfahren nach Anspruch,
wobei aus diesen λ- stacks weitere farbkodierte Bilder gebildet und/ oder ROI markiert und ausgewertet werden

15. Verfahren nach mindestens einem der vorangehenden Ansprüche,
wobei die spektrale Breite der Detektion veränderlich ist, innerhalb derer die spektrale Verteilung zusammengefaßt detektiert wird und der ein Bildkanal zugeordnet ist

16. Verfahren nach mindestens einem der vorangehenden Ansprüche,
wobei die Spektren in ROI ausgewertet werden

17. Verfahren nach mindestens einem der vorangehenden Ansprüche,
wobei Einstellelemente zur Einstellung der spektralen Breite vorgesehen sind

18. Verfahren nach mindestens einem der vorangehenden Ansprüche,
wobei die eingestellte spektrale Breite durch digitale Signalverknüpfung oder elektronische Verknüpfung von Detektionskanälen erzeugt wird.

19. Verfahren nach mindestens einem der vorangehenden Ansprüche,
wobei eine Darstellung von Einstellelementen und der spektralen Breite auf einem Monitor so erfolgt, daß eine räumliche Zuordnung der Einstellbereiche der Einstellelemente zur spektralen Breite vorliegt

20. Verfahren nach mindestens einem der vorangehenden Ansprüche,
wobei Schieberegler vorgesehen sind, deren Position auf dem Monitor der Position des zugehörigen Spektralbereiches entspricht

21. Verfahren nach mindestens einem der vorangehenden Ansprüche,
wobei bei Einstellung des Zeigers einer Computermaus auf das Einstellelement die eingestellte Wellenlänge und bei Einstellung zwischen zwei Einstellelemente der eingestellte Wellenlängenbereich auf dem Monitor angezeigt wird.

22. Verfahren nach mindestens einem der vorangehenden Ansprüche,
wobei auf einem Monitor eine wellenlängenabhängige Darstellung des zeitlichen Verhaltens von Probenbereichen oder der gesamten Probe erfolgt

23. Verfahren nach míndestens einem der vorangehenden Ansprüche,
wobei ein Graustufenbild aus dem lambda stack erzeugt wird, indem für jede x,y Pixelposition über die Wellenlängenbereiche der maximale Intensitätswert ermittelt und dargestellt wird

24. Verfahren nach Anspruch 23.
wobei weiterhin jedes Pixel mit der Farbe charakterisiert wird, die der mittleren Wellenlänge des Wellenlängenbereiches entspricht, aus dem das hellste Pixel des lambda stack stammt

25. Verfahren nach mindestens einem der vorangehenden Ansprüche,
wobei die Einzelbilder des lambda stack zumindest teilweise seriell nebeneinander oder hintereinander überlappend auf einem Bildschirm dargestellt werden

26. Verfahren nach mindestens einem der vorangehenden Ansprüche,
wobei neben einer xy, lambda Darstellung auch zeitabhängige und/ oder z abhängige Ansichten generiert und angezeigt werden

27. Verfahren nach mindestens einem der vorangehenden Ansprüche,
wobei der lambda stack durchgeschnitten wird und die entstehenden Schnittbilder dargestellt werden

28. Verfahren nach einem der vorangehenden Ansprüche, wobei die quantitative Analye ein Entmischungsverfahren ( unmixing) beinhaltet

29. Verfahren nach einem der vorangehenden Ansprüche, wobei die qualitative Analyse ein PCA Verfahren beinhaltet.
